# EUROPÄISCHE PATENTSCHRIFT

(11) **EP 0 980 880 B1**
(45) Veröffentlichungstag und Bekanntmachung des Hinweises auf die Patenterteilung: **17.11.2004**
(21) Anmeldenummer: 99115061.6
(22) Anmeldetag: 04.08.1999
(51) Int. Cl.: C08G 18/63, C08F 283/01, C09D 175/04

(54) **Verwendung einer wässrigen Bindemittelkombination zur Herstellung von physikalisch trocknenden Überzügen**
Use of an aqueous bindercombination for the preparation of physically drying coatings
Utilisation d'une combinaison de liants aqueuse pour des revêtements séchant physiquement

(30) Priorität: 17.08.1998 DE 19837063; 17.08.1998 DE 19837062
(43) Veröffentlichungstag der Anmeldung: 23.02.2000
(73) Patentinhaber: Bayer MaterialScience AG, 51368 Leverkusen (DE)
(72) Erfinder: Irle, Christoph, Dr., 47800 Krefeld (DE); Blum, Harald, Dr., 51375 Leverkusen (DE); Petzoldt, Joachim, Dr., 40789 Monheim (DE); Müller, Heino, 51377 Leverkusen (DE)

(56) Entgegenhaltungen:
- EP-A- 0 543 228
- DE-A- 4 237 957
- DE-A- 19 617 086
- GB-A- 1 084 203

## Beschreibung

Die Erfindung betrifft die Verwendung einer wäßrigen Bindemittelkombination zur Herstellung einer physikalisch schnell trocknenden und gleichzeitig steinschlagfesten und bewitterungsstabilen Beschichtung, vorzugsweise in der Automobilserienlackierung.

In der Automobilserienlackierung hat sich ein mehrschichtiger Aufbau der Deckschichten etabliert, der in zunehmendem Maße auch durch wäßrige Beschichtungsmittel realisiert wird. Dabei werden bei solchen modernen Beschichtungen auch Forderungen an die Wirtschaftlichkeit gestellt. Ziel ist, die Beschichtung in möglichst wenigen und möglichst kostengünstigen Einzelschritten zu applizieren.

Beim üblichen Lackaufbau in der Autoerstlackierung wird auf eine durch kathodische Elektrotauchlackierung (KTL) grundierte Metalloberfläche zunächst eine Steinschlagschutzschicht und eine Füllerschicht oder eine Kombination aus beiden ('Steinschlagschutzfüller') appliziert. Auf diese Schichten wird dann ein pigmentierter Basislack, anschließend ein Klarlack oder alternativ ein pigmentierter Decklack aufgebracht.

Die Steinschlagschutz und/oder -füllerschicht sorgt für einen Ausgleich von Unebenheiten der Oberfläche und bewirkt durch eine hohe Elastizität und Deformierbarkeit eine gute Beständigkeit gegen Steinschlag. Bislang werden für diese Schicht daher weiche Polyester- oder Polyether-Polyurethane sowie Polyisocyanat- oder Melaminvernetzer eingesetzt. Vor Applikation von Basislack und Klarlack bzw. Decklack wird der Steinschlagschutzfüller eingebrannt. Dies ist notwendig, um den Decklackstand zu verbessern und die Füllerschicht vor Applikation der oberen Lackschichten abzuschleifen. Nach Aufbringen des Klarlacks bzw. Decklacks wird dann erneut eingebrannt. Nachteilig an diesem Verfahren ist, daß zwei aufwendige Einbrennvorgänge notwendig sind. Physikalisch, d. h. ohne Einbrennvorgang, schnell trocknende Lacke, wie sie zum Beispiel aus Polyacrylaten formuliert werden können, weisen nicht die geforderte Steinschlagfestigkeit auf, da sie beim Einbrennvorgang zu spröden Filmen vernetzen.

Aufgabe der vorliegenden Erfindung war, ein lagerstabiles Bindemittel zu finden, das neben einer guten Steinschlagfestigkeit eine rasche physikalische Trocknung gewährleistet. Daneben sollte das Bindemittel lichtecht sein, um auch im Fall mäßig deckender Deck- oder Basislacke oder an Stellen, an denen ganz auf einen pigmentierten Deck- oder Basislack verzichtet wird, eine bewitterungsstabile Beschichtung zu erzeugen. Gesucht war demgemäß ein wäßriges Beschichtungsmittel, das die wesentlichen Eigenschaften eines Steinschlagschutzfüllers und eines Decklackbindemittels in sich vereint und zusätzlich rasch physikalisch trocknet.

Ein Lösungsvorschlag für steinschlagfeste Überzüge und/ oder Füllerschichten auf Basis wäßriger Bindemittel wird z.B. in der EP-A 330139 beschrieben. Es wird beansprucht, daß einem OH- und COOH-funktionellen Polyester ein Polyacrylat zugemischt werden kann. Entsprechende Ausführungsbeispiele werden nicht beschrieben. Eine Pfropfcopolymerisation des Polyacrylats auf einen Polyester als Pfropfgrundlage wird nicht beschrieben. Die beanspruchten Dispersionen Säure-funktioneller Polyester sind bekanntermaßen schlecht lagerstabil, da sie einem raschen chemischen Abbau durch Spaltung von Esterbindungen unterliegen (z.B. Jones, T.E.; McCarthy, J.M. , J. Coatings Technol. **76** (844), S. 57 (1995)).

Überraschend wurde nun gefunden, daß diese Aufgabe gelöst werden kann durch Verwendung einer Kombination aus speziellen wäßrigen Polyolen und blockierten Polyisocyanaten. Die erfindungsgemäß verwendeten Polyoldispersionen sind dadurch gekennzeichnet, daß sie aus Pfropfcopolymerisaten auf Polyester-Polyacrylatbasis bestehen, wobei als Polyesterkomponente bestimmte, langkettige aliphatische Monocarbonsäuren sowie a,b-ungesättigte Carbonsäuren enthaltende Polyester eingesetzt werden. Die Eignung der erfindungsgemäß verwendeten Polyoldispersionen ist insofern überraschend, da Polyole, die einen hohen Anteil Polyacrylat enthalten, bei Einbrennlackierungen, wie sie z.B. für Automobilfüller eingesetzt werden, bislang nicht die hohen Anforderungen an z.B. Elastizität und Steinschlagfestigkeit erfüllen.

Gegenstand der Erfindung ist demgemäß die Verwendung einer wäßrigen Dispersion aus
A) aus einer Polyolkomponente
   20 bis 60, bevorzugt 40 bis 55 Gew.-% einer Polyesterkomponente AI),
   dadurch gekennzeichnet, daß AI) 10 bis 60, bevorzugt 30 bis 50 Gew.-% Einheiten enthält, die sich von einer oder mehreren aliphatischen, gesättigten oder ungesättigten Monocarbonsäuren mit 8 bis 30 C-Atomen ableiten sowie 0,4 bis 5 % Einheiten enthält, die sich von einer oder mehreren, radikalisch polymerisierten, a,b-ungesättigten Mono- oder Dicarbonsäuren mit 3 bis 8 C-Atomen bzw. deren Anhydriden ableiten und
   40 bis 80 % einer Polyacrylatkomponente AII) sowie
B) einer Polyisocyanatkomponente
   bestehend aus einem oder mehreren blockierten, bevorzugt nichthydrophilierten aliphatischen Polyisocyanaten wobei gilt, daß die Komponente B) in Gewichtsanteilen, bezogen auf den Gesamt-Feststoffgehalt der Dispersion, von 1 bis 70, bevorzugt 20 bis 50 % vorliegt,
für lichtstabile, elastische und physikalisch schnell trocknende Beschichtungen in der Automobilserienlackerung.

Bevorzugt eingesetzt für die erfindungsgemäße Verwendung wird eine wäßrige Dispersion, aus
A) einer Polyolkomponente
   aus 20 bis 60 % einer Polyesterkomponente AI) mit einem Molekulargewicht von 500 bis 6000, bevorzugt 1000 bis 3000 einer Säurezahl 12 mg KOH/ g und einer OH-Zahl von 50 bis 250 mg KOH/g, dadurch gekennzeichnet, daß AI) erhältlich ist durch Umsetzung von
      AI₁₎ 10 bis 60 %, bevorzugt 30 bis 50% einer oder mehrerer aliphatischer, gesättigter oder ungesättigter Monocarbonsäuren mit 8 bis 30 C-Atomen
      AI₂₎ 0,4 bis 5 % einer a,b-ungesättigten Mono- oder Dicarbonsäure mit 3 bis 8 C-Atomen bzw. deren Anhydriden
      AI₃₎ 20 bis 60 % einer oder mehrerer aliphatischer, cycloaliphatischer oder aromatischer Di-, Tri- oder Tetracarbonsäuren mit 2 bis 20 C-Atomen bzw. deren Anhydriden
      AI₄₎ 10 bis 60 % eines oder mehrerer aliphatischer Alkohole mit 1 bis 4 OH-Gruppen pro Molekül
      AI₅₎ 0 bis 10 % einer aromatischen Monocarbonsäure
      AI₆₎ 0 bis 10 % weiteren Säure- oder OH-reaktiven Verbindungen wie z.B. Epoxiden, Isocyanaten oder Oxazolinen mit 1 bis 4, bevorzugt 1,9 bis 2,5 fünktionellen Gruppen pro Molekül
      sowie 40 bis 80 % einer Polyacrylatkomponente AII) erhältlich durch radikalische Polymerisation einer Mischung aus
      AII₁₎ 20 bis 70 % eines oder mehrerer nicht-funktioneller Ester von a,bungesättigten Carbonsäuren mit 3 bis 12 C-Atomen und aliphatischen oder cycloaliphatischen Monoalkoholen mit 1 bis 18 C-Atomen
      AII₂₎ 1 bis 10 % einer oder mehrerer a,b-ungesättigter Carbonsäuren mit 3 bis 12 C-Atomen bzw. deren Anhydriden
      AII₃₎ 0 bis 95 % eines oder mehrerer hydroxyfunktioneller, radikalisch polymerisierbarer Monomere
      AII₄₎ 0 bis 20 % weiterer radikalisch polymerisierbarer Monomere
      in Gegenwart der Polyesterkomponente AI) wobei gilt, daß die unter AI und AII gemachten Angaben auf das Gewicht bezogen sind und sich zu 100 % addieren
      sowie
B) einer Polyisocyanatkomponente
   bestehend aus einem blockierten, nichthydrophilierten aliphatischen Polyisocyanat wobei gilt, daß die Komponente B) in Gewichtsanteilen, bezogen auf den Gesamt-Feststoffgehalt der Dispersion, von 1 bis 70 % vorliegt.

Zur Herstellung der erfindungsgemäß verwendeten Polyolkomponente A) wird so vorgegangen, daß zunächst die Polyesterkomponente AI) nach üblichen Verfahren synthetisiert wird. Die Herstellung von Polyestern AI) ist bekannt (s. unten).

Als Bestandteil AI₁₎ enthält die Polyesterkomponente der erfindungsgemäßen Polyoldispersion eine oder mehrere aliphatische Monocarbonsäuren mit 8 bis 30 C-Atomen. Beispiele für gesättigte Monocarbonsäuren mit 8 bis 30 C-Atomen sind 2-Ethylhexansäure, Octansäure (Caprylsäure), Decansäure (Caprinsäure), Dodecansäure (Laurinsäure), Hexadecansäure (Cetylsäure) oder Octadecansäure (Stearinsäure). Weiterhin geeignet sind aliphatische, einfach oder mehrfach ungesättigte Monocarbonsäuren mit 8 bis 30 C-Atomen wie z.B. Ölsäure, Linolsäure oder Linolensäure. Bevorzugt eingesetzt werden Gemische aus Monocarbonsäuren, wie sie bei der Verseifüng natürlicher Öle und Fette entstehen. Beispiele für solche Fettsäuren sind Sojaölfettsäure, Tallölfettsäure, Leinölfettsäure, Rizinusölfettsäure, Kokosnußölfettsäure, Erdnußölfettsäure oder Safflorölfettsäure. Weiterhin geeignete Beispiele für Monocarbonsäuren mit 8 bis 30 C-Atomen sind hydrierte Fettsäuren, synthetische Fettsäuren z.B. aus der Parrafinoxidation oder der Koch-Synthese (J. Falbe, New Syntheses with Carbon Monoxide, Berlin, Heidelberg, New York (1980)).

Weitere Bausteine der erfindungsgemäß verwendeten Polyester sind a,b-ungesättigte Mono- oder Dicarbonsäuren mit 3 bis 8 C-Atomen AI₂₎. Beispiele für solche Carbonsäuren sind Acrylsäure, Methacrylsäure, Itaconsäure, Maleinsäure, Fumarsäure oder Tetrahydrophthalsäure. Statt der freien Carbonsäuren können auch Derivate von Carbonsäuren wie z.B. Anhydride oder Ester als Ausgangssubstanz für die Polyesterherstellung eingesetzt werden.

Beispiele für aliphatische, cycloaliphatische oder aromatische Di-, Tri- oder Tetracarbonsäuren mit 2 bis 20 C-Atomen AI₃₎ sind Phthalsäure, Isophthalsäure oder Terephthalsäure sowie Pyromellithsäure, Trimellithsäure und Bernsteinsäure, Adipinsäure, Sebacinsäure, Azelainsäure. Ebenfalls geeignet sind aus natürlichen oder synthetischen Fettsäuren hergestellte Dimerfettsäuren. Statt der freien Carbonsäuren können auch Derivate von Carbonsäuren wie z.B. Anhydride oder Ester als Ausgangssubstanz für die Polyesterherstellung eingesetzt werden.

Als OH-Komponenten AI₄₎ mit 1 bis 4 OH-Gruppen pro Molekül können z.B. aliphatische Monoalkohole wie Butanol, Pentanol oder 2-Ethylhexanol eingesetzt werden. Ebenfalls geeignet sind 'Fettalkohole', wie sie bei der Reduktion von Fettsäuren gebildet werden. Beispiele für Alkoholkomponenten mit 2 OH-Gruppen sind Ethylenglykol, Neopentylglykol, 1,4-Butandiol, 1,6-Hexandiol, Trimethylpentandiol, 1,4-Cyclohexandimethanol, Diethylenglykol, Triethylenglykol, Tripropylenglykol oder hydriertes Bisphenol. Bevorzugt werden als OH-Komponenten AI₄₎ drei- und höherwertige Alkoholkomponenten gegebenenfalls in Kombination mit zweiwertigen Alkoholen eingesetzt. Beispielhaft seien genannt Pentaerythrit, Glycerin oder Trimethylolpropan.

Als Monocarbonsäuren AI₅₎ sind z. B Benzoesäure oder Alkylbenzoesäuren.

Üblicherweise erfolgt die Herstellung der Polyesterkomponente AI) durch Polykondensation wie in der Literatur (R. Dhein, K. Reuter, G. Ruf in 'Houben-Weyl, Methoden der Organischen Chemie Bd E20/ 2', Hrsg.: H. Bartl, J. Falbe, 4. Auflage S. 1429 - 1435, Stuttgart, New York (1987)) beschrieben. Es ist jedoch auch möglich, zusätzlich mit weiteren Verbindungen AI₆₎, z.B. OH-reaktiven Verbindungen wie Polyisocyanaten oder COOH-reaktiven Verbindungen wie Epoxid-, Amino- oder Oxazolingruppen enthaltenden Substanzen umzusetzen und so Urethan- oder Amidgruppen in den Polyester einzubauen. Als Polyisocyanate sind aliphatische Polyisocyanate wie Hexamethylendiisocyanat, Isophorondiisocyanat, Methylen-bis-(4-isocyanatocyclohexan), Tetramethylxylylendiisocyanat oder modifizierte aliphatische Typen wie Isocyanurat-, Uretdion- oder Biuretgruppen enthaltende Polyisocyanate geeignet. Geeignete Epoxide sind z.B. Epoxidharze auf Basis von Bisphenol-A-diglycyidylether oder auch Cardura ® E 10 (Shell).

Die Polyacrylatkomponente AII) wird für die erfindungsgemäße Verwendung durch eine radikalische Polymerisation in Gegenwart der Polyesterkomponente AI) hergestellt. Neben der Komponente AI) können auch organische Lösemittel während der Polymerisation zugegen sein. Als organische Lösemittel werden die für die Herstellung von Polyacrylatharzen üblichen und für die Herstellung von wäßrigen Dispersionen geeigneten Lösemittel eingesetzt. Als Beispiel für geeignete Lösemittel seien genannt: Alkylbenzole wie Toluol, Xylol oder Ethylbenzol, Alkohole wie n-Butanol, iso-Propanol, Ethylenglykol-monobutylether, Diethylenglykolmonobutylether, Tripropylenglykol, 3-Methyl-3-methoxybutanol oder auch 1-Methoxypropylacetat-2, Dipropylenglykol-dimethylether. Weiterhin geeignet sind Aceton, Butanon, Ethanol, Propanol oder Hexan. Die verwendeten Lösemittel können vor, während oder nach dem Dispergierschritt ganz oder teilweise, gegebenenfalls azeotrop und/ oder durch Anlegen eines Vakuums bzw. eines verstärkten Inertgasstromes aus dem Reaktionsgemisch entfernt werden.

Bei der radikalischen Polymerisation kann z.B. so vorgegangen werden: Die Komponenten AII₁₎ bis AII₄₎ werden getrennt oder zusammen oder auch teilweise vermischt bei einer geeigneten Temperatur zu der Komponente AI) und gegebenenfalls einem Lösemittel zudosiert und dort in Gegenwart eines Polymerisationsinitiators polymerisiert. Als Polymerisationsinitiator werden an sich bekannte Verbindungen eingesetzt. Beispielsweise geeignet sind Peroxide wie Dibenzoylperoxid, Di-*t*-butylperoxid oder *t*-Butylper 2-ethylhexanoat oder auch Azoinitiatoren wie Azo-bis-isobutyronitril oder Azo-bis-isovaleronitril. Ebenso ist es möglich, die Polymerisation in Gegenwart von Reglern durchzuführen. Solche Verbindungen, die durch Radikalübertragung das Molgewicht der Polymerisate verringern, sind ebenfalls bekannt. Als Beispiele seien genannt *n*-Dodecylmercaptan oder Mercaptoessigsäure.

Zur Erzielung besonderer Eigenschaften können ein oder mehrere Monomere schneller, langsamer, früher beginnend und / oder später endend als die anderen Monomere zudosiert werden.

Als Komponente AII₁₎ kann jeder copolymerisiserbare (Cyclo)alkylester der (Meth)acrylsäure mit 1 bis 20 Kohlenstoffatomen im Cycloalkylrest oder ein Gemisch aus solchen (Meth)acrylsäureestem eingesetzt werden. In Betracht kommen besonders Alkylacrylate oder -methacrylate mit 1 bis 18 Kohlenstoffatomen im Alkylrest. Als Beispiele seine genannt: Methyl-, Ethyl-, *n*-Propyl-, *n*-Butyl-, *i*-Butyl-, *n*-Hexyl-, 2-Ethylhexyl-, *n*-Stearyl- und *n*-Laurylacrylat und -methacrylat sowie auch cycloaliphatische (Meth)acrylsäureester wie Cyclohexyl(meth)acrylat oder Norbornyl(meth)acrylat. Ebenso geeignet sind Ester der Malein- oder Fumarsäure wie z.B. Maleinsäure- oder Fumarsäuredimethyl- oder diethylester.

Beispiele für geeignete a,b-ungesättigte Carbonsäuren AII₂₎ sind z.B. Acrylsäure, Methacrylsäure, Itaconsäure, Maleinsäure, Fumarsäure oder Tetrahydrophthalsäure. Statt der freien Carbonsäuren können auch deren Anhydride als Ausgangssubstanz eingesetzt werden.

Geeignete hydroxyfunktionelle Monomere AII₃₎ sind bevorzugt alle Hydroxyalkyloder Hydroxycycloalkylester der unter AII₂₎ genannten Säuren. Diese hydroxyfunktionellen Ester werden besonders bevorzugt durch Umsetzung der (Meth)acrylsäure mit einem Alkylenoxid oder einem aliphatischen Diol erhalten. Beispielsweise geeignet sind 2-Hydroxyethyl(meth)acrylat, 2-Hydroxypropyl(meth)acrylat, 3-Hydroxypropyl(meth)acrylat, 4-Hydroxybutyl(meth)acrylat oder auch die Umsetzungsprodukte der (Meth)acrylsäure mit Monoepoxiden wie z.B. Cardura ® E10 (Shell). Weiterhin geeignet sind die Ester von (Meth)acrylsäure und oligo- oder polymerer Ethylen- oder Propylenglykole. Ebenfalls geeignet, jedoch weniger bevorzugt sind OH-Gruppen enthaltende, radikalisch polymerisierbare Monomere, die keine von a,b-ungesättigten Carbonsäuren abgeleiteten Strukturen enthalten.

Beispiele für weitere radikalisch polymerisierbare Monomere AII₄₎ sind z.B. vinylaromatische Verbindungen wie Styrol oder a-Methylstyrol, Vinylester von Carbonsäuren mit 1 bis 20 C-Atomen wie Versaticsäure, Propionsäure oder Essigsäure, Vinylether, Vinylpyrrolidon oder Verbindungen mit zwei oder mehr radikalisch polymerisierbaren Doppelbindungen wie z.B. Butandioldi(meth)acrylat, Hexandioldi(meth)acrylat, Divinylbenzol oder Polybutadien.

Zur Herstellung einer erfindungsgemäß verwendeten Polyoldispersion werden anschließend die Säuregruppen des Polyester-Polyacrylat-Pfropfcopolymers in die Salzform überführt. Dies geschieht bevorzugt durch Reaktion mit einem Amin. Besonders bevorzugt sind tertiäre Amine wie Triethylamin, N,N-Dimethylethanolamin oder N,N-Dimethylisopropanolamin. Ebenso möglich ist die Neutralisation mit z.B. Metallhydroxiden wie Kalium-, Natium- oder Lithiumhydroxid bzw. mit primären oder sekundären Aminen und Ammoniak.

Zur Überführung des hydrophilierten Harzes in wäßrige Dispersion wird anschließend unter heftigem Rühren Wasser zum Harz gegeben. Man kann jedoch ebenfalls so verfahren, daß Wasser vorgelegt und das hydrophilierte Harz unter Rühren zudosiert wird. Ein weniger bevorzugtes Verfahren besteht darin, das Neutralisationsmittel im Dispergierwasser zu lösen und unter Rühren das nichthydrophilierte Harz zuzufügen bzw. das nichthydrophilierte Harz vorzulegen und unter Rühren die Lösung des Neutralisationsamins in Wasser zuzufügen.

Die so hergestellte Polyoldispersion kann anschließend zusammen mit Vernetzerkomponenten zu einem Lack formuliert werden. Als Vernetzerkomponente werden bevorzugt blockierte Polyisocyanate eingesetzt. Zur Einarbeitung des blockierten Polyisocyanats in den wäßrigen Lack kann so vorgegangen werden, daß ein hydrophiliertes, blockiertes Polyisocyanat der Polyoldispersion zugemischt wird. Ein besonders bevorzugtes Verfahren besteht darin, ein oder mehrere nichthydrophilierte, blockierte Polyisocyanate dem Polyester-Polyacrylatharz vor Neutralisation zuzumischen und dieses Harzgemisch wie beschrieben gemeinsam zu dispergieren.

Beispiele für den blockierten Polyisocyanaten zugrunde liegende geeignete Polyisocyanate sind cycloaliphatische oder aliphatische Polyisocyanate wie Tetramethylen-diisocyanat, Cyclohexan-1,3- und 1,4-diisocyanat, Hexamethylendiisocyanat (HDI), 1-Isocyanato-3,3,5-trimethyl-5-isocyanatomethylcyclohexan (Isophorondiisocyanat, IPDI), Methylen-bis-(4-isocyanatocyclohexan), Tetramethylxylylendiisocyanat (TMXDI). Bevorzugt geeignet sind Polyisocyanate, die Heteroatome in dem die Isocyanatgruppen enthaltenden Rest enthalten. Beispiele hierfür sind Carbodiimidgruppen, Allophanatgruppen, Isocyanuratgruppen, Urethangruppen und Biuretgruppen aufweisende Polyisocyanate. Besonders gut für die Erfindung geeignet sind die bekannten Polyisocyanate, die hauptsächlich bei der Herstellung von Lacken eingesetzt werden, z.B. Biuret-Isocyanurat- oder Uretdiongruppen aufweisende Modifizierungsprodukte der oben genannten einfachen Polyisocyanate, insbesondere des Hexamethylendiisocyanats oder des Isophorondiisocyanats. Weiterhin geeignet sind niedermolekulare, Urethangruppen enthaltende Polyisocyanate, wie sie durch Umsetzung von im Überschuß eingesetztem IPDI oder TDI mit einfachen mehrwertigen Alkoholen des Molekulargewichtsbereiches 62 bis 300, insbesondere mit Trimethylolpropan oder Glycerin, erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanaten reaktionsfähigen funktionellen Gruppen zugänglich sind. In diesen bekannten Prepolymeren entspricht das Verhältnis von Isocyanatgruppen zu gegenüber NCO reaktiven Wasserstoffatomen 1,05 : 1 bis 10 : 1, vorzugsweise 1,1 :1 bis 3 : 1, wobei die Wasserstoffatome vorzugsweise aus Hydroxylgruppen stammen. Die Art und Mengenverhältnisse der bei der Herstellung von NCO-Prepolymeren eingesetzten Ausgangsmaterialien werden im übrigen vorzugsweise so gewählt, daß die NCO-Prepolymeren vorzugsweise eine mittlere NCO-Funktionalität von 2 bis 3 und ein Zahlenmittel der Molmasse von 500 bis 10000, vorzugsweise 800 bis 4000 aufweisen.

Die Isocyanatgruppen der Polyisocyanate sind vollständig blockiert. Als Blockierungsmittel können übliche Verbindungen eingesetzt werden, wie sie beispielsweise auf dem Lacksektor eingesetzt werden. Beipiele für geeignete Blockierungsmittel sind Malonsäuredimethylester, Malonsäurediethylester, Acetessigsäureethylester, e-Caprolactam, Acetanilid, sekundäre aliphatische Amine und/ oder Acetonoxim. Bevorzugt eingesetzt werden Butanonoxim, 3,5-Dimethylpyrrazol oder Triazol.

Die Blockierung der Polyisocyanate kann z.B. durch Erwärmen ein oder mehrerer Polyisocyanate mit dem Blockierungsmittel erfolgen. Beispielsweise können ein oder mehrere Polyisocyanate vorgelegt und unter Rühren erhitzt werden, z.B. auf etwa 80°C, und das Blockierungsmittel (bespielsweise während etwa 10 min.) zudosiert werden. Es wird so lange gerührt, bis kein freies Isocyanat mehr nachweisbar ist. Es ist auch möglich, ein oder mehrere Polyisocyanate mit einem Gemisch aus zwei oder mehreren Blockierungsmitteln zu blockieren.

Bevorzugt werden die beschriebenen blockierten Polyisocyanate nicht hydrophil eingestellt und die Überführung in die wäßrige Dispersion wird durch Vermischen und gemeinsames Dispergieren mit der Polyolharzschmelze bewerkstelligt. Es ist jedoch auch möglich, das Polyol allein zu dispergieren und der wäßrigen Phase eine Lösung oder Dispersion eines hydrophilierten blockierten Polyisocyanats zuzufügen. Hydrophilierte blockierte Polyisocyanate sind bekannt und z.B. beschrieben in EP-A 566 953.

Die erfindungsgemäß verwendeten wäßrigen Bindemittel können mit weiteren Bindemitteln kombiniert werden. Bevorzugt ist die Kombination mit wasserlöslichen oder wasserunlöslichen Melaminharzen sowie wasseremulgierbaren oder wasserdispergierbaren Polyesterharzen oder Polyester-Polyurethanharzen.

Zur Lackherstellung können übliche Additive (z.B. Pigmente, Füllstoffe, Hilfs- und Zusatzstoffe) zugesetzt werden, wie sie auf dem Lacksektor üblich sind. Die Mengen liegen im üblichen, dem Fachmann geläufigen Bereich.

Die erfindungegemäße Verwendung ist die Herstellung von physikalisch bei niedriger Temperatur härtbaren Einbrennlacken, bevorzugt in der Automobilerstlackierung, besonders bevorzugt für die Herstellung steinschlagfester Sperrschichten. Hierzu können die zur erfindungsgemäßen Verwendung eingesetzten Überzugsmittel durch Rakeln, Tauchen, Spritzauftag wie Druckluft- oder Airless-Spritzen, sowie durch elektrostatischen Auftrag, beispielsweise Hochrotationsglockenauftrag, aufgetragen werden. Die Trockenfilm-Schichtdicke kann beispielsweise bei 15 bis 50 µm liegen. Vorteilhaft ist, daß die erfindungsgemäßen Bindemittel zunächst bei niedriger Temperatur, z.B. bei 80°C getrocknet werden, woraufhin die Lackschicht schleifbar ist. Nach Überlackieren mit einem Basislack/Klarlack oder mit einem pigmentierten Decklack wird dann in *einem* Einbrennvorgang die Sperrschicht gemeinsam mit Klarlack oder Decklack eingebrannt. Dieser Schritt erfolgt z.B. durch Einbrennen in 20 bis 25 Minuten bei 135 bis 145°C.

Die so erzeugte Beschichtung weist optisch wie mechanisch vergleichbare Resultate auf wie ein Lackaufbau, bei dem anstatt der wäßrigen Sperrschicht ein wie üblich eingesetzter wäßriger oder lösemittelhaltiger Füller mit z.B. 25 bis 40 µm Trockenfilm-Schichtdicke mit einem eigenen Einbrennvorgang von z.B. 20 bis 25 Minuten bei 135 bis 165°C und zusätzlich Basislack/ Klarlack oder aber Decklack aufgetragen werden.

Die erfindungsgemäß verwendeten Überzugsmittel haben eine sehr hohe Lagerstabilität. Der bei wäßrigen Polyester-Dispersionen oder -Lösungen bzw. Polyester-Polyurethan-Dispersionen üblicherweise sehr rasch stattfindende chemische Abbau durch Spaltung von Esterbindungen wird bei den erfindungsgemäßen Polyester-Polyacrylat-Dispersionen nicht beobachtet. Gleichzeitig weisen die aus den erfindungsgemäßen Dispersionen bereiteten Lacke eine hervorragende Steinschlagbeständigkeit auf, die bei wäßrigen Lacken bislang nur von Systemen auf Basis von Polyester- oder Polyurethan-Dispersionen eingestellt werden konnte.

### Beispiele

### Beispiel 1 - Polyesterharz

In ein 15 l Reaktionsgefäß mit Rühr-, Kühl- und Heizvorrichtung sowie Wasserabscheider werden 4041 g Erdnußölfettsäure, 4350 g Trimethylolpropan, 1131 g Triethylenglykol, 99 g Maleinsäureanhydrid, 2035 g Phthalsäureanhydrid und 2008 g Adipinsäure eingewogen. Durch das Reaktionsgemisch wird Stickstoff geleitet. Der Ansatz wird in 4 h auf 185°C aufgeheizt. Nach 2 h bei 185°C wird dann innerhalb weiterer 2 h auf 220°C aufgeheizt. Bei dieser Temperatur wird ein starker Stickstoffstrom (ca. 30 l/ h) durch den Ansatz geleitet bis die Säurezahl auf 9 mg KOH/ g gefallen ist. Die OH-Zahl beträgt 196 mg KOH/ g.

### Beispiel 2 - Polyester-Polyacrylatharz

In einem 61-Vierhalskolben mit Innenthermometer, Rührvorrichtung, Tropftrichter, Gaseinleitung und Rückflußkühler werden in einer Stickstoffatmosphäre 500 g der Polyestervorstufe aus Beispiel 1 und 33,4 g Butyldiglykol (Diethylenglykol-monobutylether) vorgelegt. Im Tropftrichter wird eine Monomermischung aus 75 g Hydroxyethylmethacrylat, 56 g Butylacrylat, 271 g Methylmethacrylat und 50 g Styrol zubereitet. Bei einer Temperatur von 145°C wird innerhalb von 3 h die Hälfte der Monomermischung zudosiert. Parallel dazu wird eine Lösung von 10 g Di-*t*-butylperoxid in 40 g Butyldiglykol zudosiert. Anschließend wird zum Rest der Monomermischung 48 g Acrylsäure zugegeben und vermischt. Die so hergestellte zweite Monomermischung wird nun innerhalb von 1,5 h zudosiert. Parallel dazu wird eine Lösung von 5 g Di-*t*-butylperoxid in 20 g Butyldiglykol zudosiert. Anschließend wird zum Nachaktivieren noch eine Lösung von 5 g Di-*t*-butylperoxid in 20 g Butyldiglykol zudosiert.

### Beispiel 3 - Selbstvernetzende Polyester-Polyacrylat-Dispersion

In einem 41-Vierhalskolben mit Innenthermometer, Rührvorrichtung, Gaseinleitung und Rückflußkühler werden in einer Stickstoffatmosphäre 600 g der Polyester-Polyacrylatvorstufe aus Beispiel 2 und 613 g Desmodur ® BL 3175 (vernetzendes Einbrennurethanharz auf Basis Hexamethylendiisocyanat, 75 %-ig in Solventnaphtha 100 gelöst) bei 70°C homogenisiert. Es werden 61 g N,N-Dimethylethanolamin zugegeben und 30 Minuten gerührt. Anschließend werden 1153 g Wasser zugegeben. Das Produkt ist eine milchige wäßrige Dispersion mit einer mittleren Teilchengröße von 213 nm (bestimmt durch Laserkorrelationsspektroskopie), einer Viskosität von 3574 mPa·s und einem nichtflüchtigen Anteil von 43,2 %.

Auf eine Glasplatte wird ein Film aus der selbstvernetzenden Polyester-Polyacrylat-Dispersion mit einer Naßfilmschichtdicke von 210 µm aufgetragen und 10 min bei Umgebungstemperatur getrocknet. Dann wird weitere 30 min bei 80°C forciert getrocknet.

Nach Abkühlen auf Raumtemperatur ist der Film drucktrocken und gut schleifbar.

## Patentansprüche

1. Verwendung einer wäßrigen Dispersion aus
A) einer Polyolkomponente aus
20 bis 60 Gew.-% einer Polyesterkomponente AI), **dadurch gekennzeichnet, daß** AI) 10 bis 60 Gew.-% Einheiten enthält, die sich von einer oder mehreren aliphatischen, gesättigten oder ungesättigten Monocarbonsäuren mit 8 bis 30 C-Atomen ableiten sowie 0,4 bis 5 % Einheiten enthält, die sich von einer oder mehreren, radikalisch polymerisierten, a,b-ungesättigten Mono- oder Dicarbonsäuren mit 3 bis 8 C-Atomen bzw. deren Anhydriden ableiten und
40 bis 80 % einer Polyacrylatkomponente AII) sowie
B) einer Polyisocyanatkomponente
bestehend aus einem oder mehreren blockierten aliphatischen Polyisocyanaten wobei gilt, daß die Komponente B) in Gewichtsanteilen, bezogen auf den Gesamt-Feststoffgehalt der Dispersion, von 1 bis 70 % vorliegt
für lichtstabile, elastische und physikalisch schnell trocknende Beschichtungen in der Automobilserienlackierung.

2. Verwendung einer wäßrigen Dispersion nach Anspruch 1 aus
A) einer Polyolkomponente
aus 20 bis 60 % einer Polyesterkomponente AI) mit einem Molekulargewicht von 500 bis 6000, einer Säurezahl < 12 KOH/ g und einer OH-Zahl von 50 bis 250 mg KOH/ g, **dadurch gekennzeichnet, daß** AI) erhältlich ist durch Umsetzung von
AI₁₎ 10 bis 60 % einer oder mehrerer aliphatischer, gesättigter oder ungesättigter Monocarbonsäuren mit 8 bis 30 C-Atomen
AI₂₎ 0,4 bis 5 % einer a,b-ungesättigten Mono- oder Dicarbonsäure mit 3 bis 8 C-Atomen bzw. deren Anhydriden
AI₃₎ 20 bis 60 % einer oder mehrerer aliphatischer, cycloaliphatischer oder aromatischer Di-, Tri- oder Tetracarbonsäuren mit 2 bis 20 C-Atomen bzw. deren Anhydriden
AI₄₎ 10 bis 60 % eines oder mehrerer aliphatischer Alkohole mit 1 bis 4 OH-Gruppen pro Molekül
AI₅₎ 0 bis 10 % einer aromatischen Monocarbonsäure
AI₆₎ 0 bis 10 % weiteren Säure- oder OH-reaktiven Verbindungen wie z.B. Epoxiden, Isocyanaten oder Oxazolinen mit 1 bis 4, bevorzugt 1,9 bis 2,5 funktionellen Gruppen pro Molekül
sowie 40 bis 80 % einer Polyacrylatkomponente AII) erhältlich durch radikalische Polymerisation einer Mischung aus
AII₁₎ 20 bis 70 % eines oder mehrerer nicht-funktioneller Ester von a,b-ungesättigten Carbonsäuren mit 3 bis 12 C-Atomen und aliphatischen oder cycloaliphatischen Monoalkoholen mit 1 bis 18 C-Atomen
AII₂₎ 1 bis 10 % einer oder mehrerer a,b-ungesättigter Carbonsäuren mit 3 bis 12 C-Atomen bzw. deren Anhydriden
AII₃₎ 0 bis 95 % eines oder mehrerer hydroxyfunktioneller, radikalisch polymerisierbarer Monomere
AII₄₎ 0 bis 20 % weiterer radikalisch polymerisierbarer Monomere
in Gegenwart der Polyesterkomponente AI) wobei gilt, daß die unter AI und AII gemachten Angaben auf das Gewicht bezogen sind und sich zu 100 % addieren
sowie
B) einer Polyisocyanatkomponente
bestehend aus einem blockierten, nichthydrophilierten aliphatischen Polyisocyanat, wobei gilt, daß die Komponente B) in Gewichtsanteilen, bezogen auf den Gesamt-Feststoffgehalt der Dispersion, von 1 bis 70 % vorliegt
für lichtstabile, elastische und physikalisch schnell trocknende Beschichtungen in der Automobilserienlackierung.

3. Verwendung einer wäßrigen Dispersion gemäß Anspruch 1, **dadurch gekennzeichnet, daß** die Polyisocyanatkomponente B) ein nichthydrophiliertes Polyisocyanat ist und gemeinsam mit der Polyolkomponente A) dispergiert wird für lichtstabile, elastische und physikalisch schnell trocknende Beschichtungen in der Automobilserienlackierung.

4. Verwendung einer wäßrigen Dispersion gemäß Anspruch 1, **gekennzeichnet dadurch, daß** die Polyolkomponente A) zu 40 bis 55 % aus der Polyesterkomponente AI) mit einem Molekulargewicht von 500 bis 6000 besteht für lichtstabile, elastische und physikalisch schnell trocknende Beschichtungen in der Automobilserienlackierung.

5. Verwendung einer wäßrigen Dispersion gemäß Anspruch 1, **gekennzeichnet dadurch, daß** die Polyolkomponente A) zu 40 bis 55 % aus der Polyesterkomponente AI) mit einem Molekulargewicht von 1000 bis 3000 besteht für lichtstabile, elastische und physikalisch schnell trocknende Beschichtungen in der Automobilserienlackierung.

6. Verwendung einer wäßrigen Dispersion gemäß Anspruch 1, **gekennzeichnet dadurch, daß** die Polyesterkomponente AI) zu 30 bis 50 % Bausteine aus einer oder mehreren aliphatischen Monocarbonsäuren AI₁₎ mit 8 bis 30 C-Atomen enthält für lichtstabile, elastische und physikalisch schnell trocknende Beschichtungen in der Automobilserienlackierung.

7. Verwendung einer wäßrigen Dispersion gemäß Anspruch 1, **gekennzeichnet dadurch, daß** AI₁₎ eine Mischung ist, die zu 80 bis 100 % aus aliphatischen Monocarbonsäuren mit 12 bis 20 C-Atomen und weniger als zwei Doppelbindungen pro Molekül zusammengesetzt ist für lichtstabile, elastische und physikalisch schnell trocknende Beschichtungen in der Automobilserienlackierung.

8. Verwendung einer wäßrigen Dispersion gemäß Anspruch 1, **gekennzeichnet dadurch, daß** die Polyacrylatkomponente in zwei Teilen polymerisiert wird, wobei der erste Teil eine Säurezahl von weniger als 10 mg KOH/ g und der zweite Teil eine Säurezahl von mehr als 20 mg KOH/ g aufweist für lichtstabile, elastische und physikalisch schnell trocknende Beschichtungen in der Automobilserienlackierung.

9. Verwendung einer wäßrigen Dispersion gemäß Anspruch 1 in Kombination mit einem oder mehreren wasserdispergierbaren Melaminharzen, hydrophilierten Polyisocyanaten sowie Polyester- und/ oder Polyester-Polyurethanharzen für lichtstabile, elastische und physikalisch schnell trocknende Beschichtungen in der Automobilserienlackierung.

## Claims

1. Use of an aqueous dispersion comprising
A) a polyol component comprising
20 to 60 wt. % of a polyester component AI), **characterized in that** AI) contains 10 to 60 wt. % of units derived from one or more aliphatic, saturated or unsaturated monocarboxylic acids having 8 to 30 carbon atoms, and contains 0.4 to 5% of units derived from one or more radically polymerized, α,β-unsaturated mono- or di-carboxylic acids having 3 to 8 carbon atoms, and/or anhydrides thereof, and
40 to 80% of a polyacrylate component AII)
and
B) a polyisocyanate component
composed of one or more blocked aliphatic polyisocyanates, component B) being present in weight fractions, based on the total solids content of the dispersion, of 1 to 70%
for light-stable, elastic and physically rapidly drying coatings in the OEM finishing of motor vehicles.

2. Use of an aqueous dispersion according to Claim 1 comprising
A) a polyol component
comprising 20 to 60% of a polyester component AI) having a molecular weight of 500 to 6000, an acid number <12 mg of KOH/g and an OH number of 50 to 250 mg of KOH/g, **characterized in that** AI) is obtainable by reacting
AI₁₎ 10 to 60% of one or more aliphatic, saturated or unsaturated monocarboxylic acids having 8 to 30 carbon atoms
AI₂₎ 0.4 to 5% of an α,β-unsaturated mono- or di-carboxylic acid having 3 to 8 carbon atoms and/or anhydrides thereof
AI₃₎ 20 to 60% of one or more aliphatic, cycloaliphatic or aromatic di-, tri- or tetra-carboxylic acids having 2 to 20 carbon atoms, and/or anhydrides thereof
AI₄₎ 10 to 60% of one or more aliphatic alcohols having 1 to 4 OH groups per molecule
AI₅₎ 0 to 10% of an aromatic monocarboxylic acid
AI₆₎ 0 to 10% of other acid- or OH-reactive compounds such as, for example, epoxides, isocyanates or oxazolines having 1 to 4, preferably 1.9 to 2.5, functional groups per molecule
and 40 to 80% of a polyacrylate component AII) obtainable by radical polymerization of a mixture comprising
AII₁₎ 20 to 70% of one or more non-functional esters of α,β-unsaturated carboxylic acids having 3 to 12 carbon atoms and aliphatic or cycloaliphatic monoalcohols having 1 to 18 carbon atoms
AII₂₎ 1 to 10% of one or more α,β-unsaturated carboxylic acids having 3 to 12 carbon atoms, and/or anhydrides thereof
AII₃) 0 to 95% of one or more hydroxy-functional, radically polymerizable monomers
AII₄₎ 0 to 20% of other radically polymerizable monomers
in the presence of the polyester component AI), the figures given under AI and AII being on a weight basis and adding up to 100%
and
B) a polyisocyanate component
composed of a blocked, non-hydrophilicized aliphatic polyisocyanate, component B) being present in weight fractions, based on the total solids content of the dispersion, of 1 to 70%,
for light-stable, elastic and physically rapidly drying coatings in the OEM finishing of motor vehicles.

3. Use of an aqueous dispersion according to Claim 1, **characterized in that** the polyisocyanate component B) is a non-hydrophilicized polyisocyanate and is dispersed together with the polyol component A), for light-stable, elastic and physically rapidly drying coatings in the OEM finishing of motor vehicles.

4. Use of an aqueous dispersion according to Claim 1, **characterized in that** 40 to 55% of the polyol component A) is composed of the polyester component AI) having a molecular weight of 500 to 6000 for light-stable, elastic and physically rapidly drying coatings in the OEM finishing of motor vehicles.

5. Use of an aqueous dispersion according to Claim 1, **characterized in that** 40 to 55% of the polyol component A) is composed of the polyester component AI) having a molecular weight of 1000 to 3000 for light-stable, elastic and physically rapidly drying coatings in the OEM finishing of motor vehicles.

6. Use of an aqueous dispersion according to Claim 1, **characterized in that** the polyester component AI) contains 30 to 50% of units of one or more aliphatic monocarboxylic acids A1₁₎ having 8 to 30 carbon atoms for light-stable, elastic and physically rapidly drying coatings in the OEM finishing of motor vehicles.

7. Use of an aqueous dispersion according to Claim 1, **characterized in that** AI₁₎ is a mixture composed of 80 to 100% of aliphatic monocarboxylic acids having 12 to 20 carbon atoms and less than two double bonds per molecule for light-stable, elastic and physically rapidly drying coatings in the OEM finishing of motor vehicles.

8. Use of an aqueous dispersion according to Claim 1, **characterized in that** the polyacrylate component is polymerized in two parts, the first part having an acid number of less than 10 mg of KOH/g and the second part having an acid number of more than 20 mg of KOH/g, for light-stable, elastic and physically rapidly drying coatings in the OEM finishing of motor vehicles.

9. Use of an aqueous dispersion according to Claim 1 in combination with one or more water-dispersible melamine resins, hydrophilicized polyisocyanates and also polyester and/or polyester-polyurethane resins for light-stable, elastic and physically rapidly drying coatings in the OEM finishing of motor vehicles.

## Revendications

1. Mise en oeuvre d'une dispersion aqueuse composée de:
A) un composant polyol à partir de:
20 à 60% en poids d'un composant polyester AI) **caractérisé en ce que** AI) contient 10 à 60% en poids d'unités qui sont dérivées d'un ou plusieurs acides monocarboxyliques aliphatiques saturés ou insaturés avec 8 à 30 atomes C ainsi que 0,4 à 5% d'unités qui sont déduites d'un ou plusieurs acides mono ou dicarboxyliques avec 3 à 8 atomes C a,b-insaturés et polymérisés radicalement ou leurs anhydrides et
40 à 80% en poids d'un composant polyacrylate AII)
ainsi que
B) un composant polyisocyanate
composé d'un ou plusieurs polyisocyanates aliphatiques bloqués, le composant B) étant présent dans des parts en poids de 1 à 70% par rapport à la teneur totale en matières solides de la dispersion
pour des revêtements photostables, élastiques et à séchage rapide physiquement dans les peintures automobiles.

2. Mise en oeuvre d'une dispersion aqueuse selon la revendication 1 composée de
a) un composant polyol
de 20 à 60% d'un composant polyester A1) avec un poids moléculaire de 500 à 6000, un indice acide < 12 KOH/g et un indice OH de 50 à 250 mg KOH/g, **caractérisé en ce que** AI) est obtenu par mise en réaction de
AI1) 10 à 60% d'un ou plusieurs acides monocarboxyliques aliphatiques, saturés ou insaturés, avec 8 à 30 atomes C
AI2) 0,4 à 5% d'un acide mono ou dicarboxylique a,b-insaturé avec 3 à 8 atomes C ou leurs anhydrides
AI3) 20 à 60% d'un ou plusieurs acides di, tri ou tétracarboxyliques aliphatiques, cycloaliphatiques ou aromatiques avec 2 à 20 atomes C ou leurs anhydrides
AI4) 10 à 60% d'un ou plusieurs alcools aliphatiques avec 1 à 4 radicaux OH par molécule
AI5) 0 à 10% d'un acide monocarboxylique aromatique
AI6) 0 à 10% d'autres composés réactifs aux acides ou OH comme, p. ex., des époxydes, des isocyanates ou des oxazolines avec 1 à 4, de préférence 1,9 à 2,5 radicaux fonctionnels par molécule
ainsi que 40 à 80% d'un composant polyacrylate AII) obtenu par polymérisation radicale d'un mélange de
AII1) 20 à 70% d'un ou plusieurs esters non fonctionnels d'acides carboxyliques a,b-insaturés avec 3 à 12 atomes C et des monoalcools aliphatiques ou cycloaliphatiques avec 1 à 18 atomes C,
AII2) 1 à 10% d'un ou plusieurs acides carboxyliques a,b-insaturés avec 3 à 12 atomes C ou leurs anhydrides,
AII3) 0 à 95% d'un ou plusieurs monomères polymérisables radicalement et hydroxyfonctionnels
AII4) 0 à 20% d'autres monomères polymérisables radicalement
en présence du composant polyester AI), les indications faites sous AI et AII se rapportant au poids et s'additionnant pour donner 100%
ainsi que
B) un composant polyisocyanate
composé d'un polyisocyanate aliphatique non hydrophilé bloqué, le composant B) étant présent dans des parts en poids de 1 à 70% par rapport à la teneur totale en matières solides de la dispersion
pour les revêtements photostables, élastiques et à séchage rapide physiquement dans les peintures automobiles de série.

3. Mise en oeuvre d'une dispersion aqueuse selon la revendication 1, **caractérisée en ce que** le composant polyisocyanate B) est un polyisocyanate non hydrophilé et est dispersé en même temps que le composant polyol A) pour les revêtements photostables, élastiques et à séchage rapide physiquement dans les peintures automobiles de série.

4. Mise en oeuvre d'une dispersion aqueuse selon la revendication 1, **caractérisée en ce que** le composant polyol A) se compose à raison de 40 à 55% du composant polyester A1) avec un poids moléculaire de 500 à 6000 pour les revêtements photostables, élastiques et à séchage rapide physiquement dans les peintures automobiles de série.

5. Mise en oeuvre d'une dispersion aqueuse selon la revendication 1, **caractérisée en ce que** le composant polyol A) se compose à raison de 40 à 55% du composant polyester A1) avec un poids moléculaire de 1000 à 3000 pour les revêtements photostables, élastiques et à séchage rapide physiquement dans les peintures automobiles de série.

6. Mise en oeuvre d'une dispersion aqueuse selon la revendication 1, **caractérisée en ce que** le composant polyester A1) contient 30 à 50% d'unités d'un ou plusieurs acides monocarboxyliques aliphatiques AI1) avec 8 à 30 atomes C pour les revêtements photostables, élastiques et à séchage rapide physiquement dans les peintures automobiles de série.

7. Mise en oeuvre d'une dispersion aqueuse selon la revendication 1, **caractérisée en ce que** AI1) est un mélange qui se compose de 80 à 100% d'acides monocarboxyliques aliphatiques avec 12 à 20 atomes C et moins de deux doubles liaisons par molécule pour les revêtements photostables, élastiques et à séchage rapide physiquement dans les peintures automobiles de série.

8. Mise en oeuvre d'une dispersion aqueuse selon la revendication 1, **caractérisée en ce que** le composant polyacrylate est polymérisé en deux parties, la première partie présentant un indice acide de moins de 10 mg KOH/g et la deuxième partie un indice acide de plus de 20 mg KOH/g pour les revêtements photostables, élastiques et à séchage rapide physiquement dans les peintures automobiles de série.

9. Mise en oeuvre d'une dispersion aqueuse selon la revendication 1 en association avec une ou plusieurs résines mélaminées dispersibles dans l'eau, des polyisocyanates hydrophiles ainsi que des résines de polyester et/ou polyester-polyuréthane pour les revêtements photostables, élastiques et à séchage rapide physiquement dans les peintures automobiles de série.
